(19) Europäisches Patentamt
European Patent Office
Office européen des brevets

(11) EP 0 839 890 A2

## (12) EUROPÄISCHE PATENTANMELDUNG

(43) Veröffentlichungstag:
06.05.1998 Patentblatt 1998/19

(51) Int. Cl.⁶: $C10G\ 1/00$, $C10J\ 3/00$

(21) Anmeldenummer: 97118327.2

(22) Anmeldetag: 22.10.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 29.10.1996 DE 19644964
08.08.1997 DE 19734488

(71) Anmelder:
THERMOSELECT AKTIENGESELLSCHAFT
FL-9490 Vaduz (LI)

(72) Erfinder: Kiss, Günter H.
6648 Minusio (CH)

(74) Vertreter:
Pfenning, Meinig & Partner
Mozartstrasse 17
80336 München (DE)

(54) **Verfahren zur vollständigen, stofflichen, emissionslosen Nutzung des beim Hochtemperaturrecycling von Abfällen aller Art gewonnenen Synthesereingases**

(57)   Verfahren zur vollständigen, stofflichen emissionslosen Nutzung des beim Hochtemperatur-Recycling von Abfällen aller Art gewonnenen Synthesereingases, bei dem das Synthesereingas unterbrechungslos in einem katalytischen Prozeß mindestens teilweise in Kohlendioxid und Wasserstoff konvertiert wird.

EP 0 839 890 A2

**Beschreibung**

Alle bekannten thermischen Verfahren zur Abfallentsorgung zeichnen sich dadurch aus, daß gasförmige Emissionen entstehen und daß zu deponierende Reststoffe verbleiben.

In DE 41 30 416 C1 wird ein thermisches Verfahren zur Abfallverwertung beschrieben, das vergleichen mit allen bekannten und großtechnisch eingesetzten Verfahren wesentliche ökologische, wirtschaftliche und technische Vorteile besitzt. Das anfallende mineralische Granulat ist absolut inert, die Eisenmetallegierung kann metallurgisch genutzt werden. Im Anspruch 11 dieses Verfahrens wird vorgeschlagen, das gereinigte Synthesegas thermisch, bzw. energetisch zu nutzen; hierbei entstehen zwangsläufig verbrennungsbedingte Schadstoffe, die mindestens teilweise die Atmosphäre belasten können. Die im Synthesegas enthaltenen Schwermetalle und Chlor- und Fluorverbindungen werden separiert, und es entsteht u.a. ein zu deponierender Schwermetallsulfid- bzw. -hydroxidschlamm.

Obwohl bei diesem Verfahren nur minimale Schadstoffkonzentrationen anfallen können, die weit unter allen Vorschriften und Normen liegen, und die zu deponierenden Restmengen gemessen am Input zumeist unter 1 % liegen, ist auch dieses Verfahren weder emissionsnoch rückstandsfrei.

Der vorliegenden Erfindung liegt die Aufgabe zugrunde, ein Verfahren zu entwickeln, bei dem das Synthesereingas vollständig stofflich genutzt wird und keine Emissionen entstehen.

Die Aufgabe wird erfindungsgemäß durch die im kennzeichnenden Teil des Anspruchs 1 angegebenen Merkmale gelöst.

Vorteilhafte Weiterbildungen und Ausgestaltungen dieser Aufgabenlösung ergeben sich aus den Unteransprüchen.

Erfindungsgemäß wird somit vorgeschlagen, Synthesereingas, das bevorzugt aus dem Prozeß, wie in der DE 41 30 416 C1 beschrieben, stammt, mindestens teilweise in $CO_2$ und Wasserstoff zu konvertieren. Besonders hervorzuheben ist, daß die verbleibenden Restgase in den Hochtemperaturreaktor zurückgeführt werden können, und der Prozeß emissionslos abläuft. Die konvertierten Komponenten werden einer Nutzung zugeführt.

Eine bevorzugte Ausführungsform sieht vor, das Synthesereingas, das im wesentlichen aus Wasserstoff, Kohlenmonoxid und Kohlendioxid besteht, in einem katalytischen Prozeß mit Wasserdampf zu beaufschlagen, um das im Synthesegas enthaltene Kohlenmonoxid vollständig in Wasserstoff und Kohlendioxid zu konvertieren

$$(CO + H_2O \rightarrow H_2 + CO_2).$$

Die beiden Gasbestandteile Wasserstoff und Kohlendioxid können mit allgemein bekannten Verfahren (wie z.B. Preasure Swing Adsorptions-Anlage) getrennt und marktlich genutzt werden.

Kohlendioxid kann verdichtet, gekühlt und als Trokkeneis eingesetzt werden.

Wasserstoff kann energetisch und/oder stofflich genutzt werden. Wird Wasserstoff als Brenn- oder Kraftstoff eingesetzt, besitzt man einen absolut emissionsfreien Energieträger, da bei der energetischen Nutzung von Wasserstoff ausschließlich Wasser entsteht

$$(2H_2 + O_2 \rightarrow 2H_2O).$$

Wird Wasserstoff anstelle von fossilen Brenn- oder Kraftstoffen eingesetzt, entfällt die Belastung der Umwelt, die bei Einsatz von fossilen Brenn- oder Kraftstoffen zwangsläufig entsteht. Da die Rohstoffe, aus denen fossile Brenn- und Kraftstoffe gewonnen werden, begrenzt sind, können diese Ressourcen sinnvoller genutzt werden.

Wasserstoff kann darüber hinaus energetisch zur Stromproduktion in Brennstoffzellen eingesetzt werden. Brennstoffzellen besitzen - verglichen mit konventionellen Kraftwerken- nicht nur einen wesentlich höheren Wirkungsgrad, Brennstoffzellen produzieren darüber hinaus Strom, ohne daß hierbei irgendwelche Schadstoffe entstehen.

Wasserstoff kann zur stofflichen Nutzung beispielsweise in Hydrierungs- und Syntheseverfahren eingesetzt werden. Bei der organischen Hydrierung werden bei Druck und definierten Temperaturen bestehende organische Moleküle mit Wasserstoff angereichert.

Bei der anorganischen Hydrierung werden Metalloxide mit Wasserstoff zu Metallen reduziert

$$(z.B. WO_3 + 3H_2 \rightarrow W + 3H_2O).$$

Aus Wasserstoff und Stickstoff kann in einer Synthese "Ammoniak" hergestellt werden. Besonders hervorzuheben ist, daß der zur Abfallvergasung benötigte Sauerstoff mit einer Luftzerlegungsanlage gewonnen wird, hierbei fällt auch Stickstoff an, der für die Ammoniaksynthese wirtschaftlich genutzt werden kann. Besonders vorteilhaft ist, daß die Luftzerlegungsanlage bereits Bestandteil des Prozesses ist.

Soll Wasserstoff zur Herstellung von Methanol eingesetzt werden, ist es sinnvoll, das im Synthesegas vorhandene Kohlendioxid durch Beaufschlagung mit Wasserdampf nur soweit in Wasserstoff und Kohlenstoff zu konvertieren, bis Wasserstoff und Kohlenmonoxid im Verhältnis 2:1 im Synthesegas vorhanden sind (Teilkonvertierung).

Anschließend wird Kohlendioxid mit allgemein bekannten Verfahren separiert, Wasserstoff und Kohlenmonoxid werden einer Synthese unterzogen, es fällt Methanol an.

Durch die stoffliche Nutzung des Wasserstoffs werden lager- und transportfähige Chemierohstoffe gewonnen, die vielfältig genutzt werden können.

## Patentansprüche

1. Verfahren zur vollständigen, stofflichen, emissionslosen Nutzung des beim Hochtemperaturrecycling von Abfällen aller Art gewonnenen Synthesereingases,
**dadurch gekennzeichnet**,
daß das so gewonnene Synthesereingas unterbrechungslos in einem katalytischen Prozeß mit Wasserdampf beaufschlagt wird, um das im Synthesegas enthaltene Kohlenmonoxid mindestens teilweise in Kohlendioxid und Wasserstoff zu konvertieren, die verbleibenden Restgase in den Hochtemperaturreaktor zurückzuführen, das gewonnene Hauptprodukt, bestehend aus Wasserstoff, Kohlenmonoxid und Kohlendioxid, anschließend in einem bekannten Trennverfahren, wie z.B. in einer "Preasure Swing Adosorptions Anlage" in die Bestandteile Wasserstoff und/oder Kohlenmonoxid und/oder Kohlendioxid zu trennen und zu nutzen.

2. Verfahren nach Anspruch 1,
dadurch gekennzeichnet, daß das so gewonnene Synthesereingas unterbrechungslos einer solchen Teilkonvertierung unterzogen wird, bis Wasserstoff und Kohlenmonoxid das für die Methanolsynthese notwendige Volumenverhältnis von 2 zu 1 erreicht, anschließend wird Kohlendioxid durch allgemein bekannte Verfahren separiert, so daß aus dem verbleibenden Wasserstoff-Kohlenmonoxid-Gemisch in einer Synthese Methanol gewonnen werden kann

$$(2H_2 + CO \rightarrow CH_3OH).$$

3. Verfahren nach Anspruch 1,
dadurch gekennzeichnet, daß das so gewonnene Synthesereingas einer vollständigen Konvertierung in Kohlendioxid und Wasserstoff unterzogen wird, und die so gewonnenen Stoffe getrennt genutzt werden.

4. Verfahren nach Anspruch 3,
dadurch gekennzeichnet, daß der Wasserstoff zusammen mit dem bei der Sauerstofferzeugung bei der Hochtemperaturvergasung aus der Luftzerlegung anfallenden Stickstoff zur Ammoniaksynthese eingesetzt wird.

5. Verfahren nach Anspruch 3,
dadurch gekennzeichnet, daß der Wasserstoff bevorzugt als Treibstoff zum Antrieb der die thermische Behandlungseinrichtung beschickende LKW-Flotte eingesetzt wird.

6. Verfahren nach Anspruch 3,
dadurch gekennzeichnet, daß der Wasserstoff in Brennstoffzellen zur Stromerzeugung eingesetzt wird.